# EUROPÄISCHE PATENTSCHRIFT

(11) **EP 3 146 223 B1**
(45) Veröffentlichungstag und Bekanntmachung des Hinweises auf die Patenterteilung: **05.06.2019**
(21) Anmeldenummer: 15729345.7
(22) Anmeldetag: 24.04.2015
(51) Int. Cl.: B62D 1/16, F16C 19/06

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 23.05.2014 DE 102014107292
(43) Veröffentlichungstag der Anmeldung: 29.03.2017
(73) Patentinhaber: ThyssenKrupp Presta AG, 9492 Eschen (LI); thyssenkrupp AG, 45143 Essen (DE)
(72) Erfinder: SULSER, Hansjoerg, FL-9487 Gamprin (LI); FORTE, Sebastian, 9493 Mauren (LI); WIEBE, Richard, FL-9490 Vaduz (LI); SENN, Mathias, 9475 Sevelen (CH)
(74) Vertreter: thyssenkrupp Intellectual Property GmbH
(86) Internationale Anmeldenummer: PCT/EP2015/058953
(87) Internationale Veröffentlichungsnummer: WO 2015/176914

(56) Entgegenhaltungen:
- EP-A1- 2 150 714
- EP-A2- 1 394 426
- CN-Y- 200 977 941
- DE-A1- 19 860 345
- FR-A1- 2 921 327
- JP-A- H11 342 853
- JP-A- 2008 260 375
- JP-A- 2014 051 181
- US-B1- 6 474 875

## Beschreibung

### Technisches Gebiet

Die vorliegende Erfindung betrifft eine Lenksäule für ein Kraftfahrzeug, umfassend einen Lenksäulenmantel, wobei der Lenksäulenmantel eine Mantelfläche mit einem Halteabschnitt umfasst, wobei der Halteabschnitt ein Lager zur drehbaren Lagerung einer Lenkspindel um eine Drehachse zumindest teilweise umschließt und wobei der Halteabschnitt mindestens eine einen Teil des Lenksäulenmantels ausbildende Lasche aufweist, die das Lager im Lenksäulenmantel in Richtung der Drehachse sichert, wobei die Lasche mit dem Halteabschnitt des Lenksäulenmantels entlang einer Biegekante verbunden ist, wobei die Biegekante mit einer projizierten Drehachse einen Projektionswinkel von maximal 45° einschließt und wobei das freie Ende der Lasche in Richtung zu der Drehachse hin um die Biegekante gebogen ist.

### Stand der Technik

Lenksäulen für Kraftfahrzeuge sind bekannt, bei welchen in einem Lenksäulenmantel die Lenkspindel in einem Lager, üblicherweise in einem Wälzlager, drehbar aufgenommen ist. Die Lenkspindel dient zur Übertragung eines Lenkmoments von einem an der Lenkspindel angebrachten Lenkrad auf ein zu lenkendes Rad. Der Lenksäulenmantel ist dabei üblicherweise über eine Halteeinheit am Chassis des Kraftfahrzeugs angebunden. Um das Lenkrad an die jeweilige Sitzposition eines Fahrers anpassen zu können, ist es weiterhin bekannt, den Lenksäulenmantel zur Höheneinstellung an seinem dem Fahrer zugewendeten Ende verschwenken zu können und eine Längsverstellung vorzusehen.

Um die Lenkspindel rotierbar im Lenksäulenmantel zu halten, sind üblicherweise Wälzlager im Lenksäulenmantel gehalten, in welchen die Lenkspindel um die Drehachse herum drehbar aufgenommen ist. Hierbei ist es gewünscht, dass die Lenkspindel bezüglich des Lenksäulenmantels eine hohe axiale Steifigkeit aufweist, um zu gewährleisten, dass sich weder die Spindel noch das Lager im Crash-Fall oder bei einer hohen Beanspruchung des Lenkrads durch den Fahrer im Lenksäulenmantel verschieben.

Grundsätzlich ist aus dem Stand der Technik, beispielsweise aus der DIN 472, bekannt, Sicherungsringe zur axialen Sicherung von Wälzlagern in Gehäusen vorzusehen. Nachteilig an einer solchen Sicherung mittels eines Sicherungsringes ist die Notwendigkeit des zusätzlichen Bauteils in Form des Sicherungsringes sowie eine notwendige Bearbeitung des Lenksäulenmantels zur Ausbildung der erforderlichen Sicherungsringnut.

Aus der CN 2009 77 941 Y ist eine Sicherung eines Wälzlagers in einem Lenksäulenmantel mittels sich in Richtung der Drehachse erstreckenden Laschen bekannt, wobei die Laschen dann zur Sicherung des Lagers umgebogen werden. Um auf diese Weise eine spielfreie Lagersicherung zu erreichen, sind hohe Toleranzanforderungen an die Ausprägung der Ausstanzungen für die Laschen sowie an die Maßhaltigkeit der Breite des Lagers gestellt.

Die JP 2008 260375 A offenbart die Merkmale des Oberbegriffs des Anspruchs 1, und ebenfalls eine Lenksäule für ein Kraftfahrzeug, bei der das Lager im Lenksäulenmantel durch mindestens eine um eine Biegekante radial nach innen umgebogene Lasche gesichert wird. Eine spielfreie Lagersicherung erfordert ebenfalls, dass die Position der Lasche mit hoher Genauigkeit auf die Breite des Lagers abgestimmt wird.

Aus der US 6,474,875 B1 ist eine Lagervorrichtung bekannt, bei welcher Laschen, welche Teil des Mantelrohrs sind, zum Eingreifen in eine Nut im Außenring des Lagers vorgesehen sind, wobei die Laschen zum Halten des Wälzlagers in die Nut herein gebogen werden. Hierzu ist es notwendig, das Wälzlager mit einer Umfangsnut zu versehen.

### Darstellung der Erfindung

Ausgehend von dem bekannten Stand der Technik ist es eine Aufgabe der vorliegenden Erfindung, eine Lenksäule für ein Kraftfahrzeug anzugeben, bei welcher ein Sitz des Lagers mit einer hohen axialen Steifigkeit bei einem einfachen Aufbau der Lenksäule erreicht werden kann.

Diese Aufgabe wird durch eine Lenksäule mit den Merkmalen des Anspruchs 1 gelöst. Vorteilhafte Weiterbildungen ergeben sich aus den Unteransprüchen.

Entsprechend wird eine Lenksäule für ein Kraftfahrzeug umfassend einen Lenksäulenmantel vorgeschlagen, wobei der Lenksäulenmantel eine Mantelfläche mit einem Halteabschnitt umfasst, wobei der Halteabschnitt ein Lager zur drehbaren Lagerung einer Lenkspindel um eine Drehachse zumindest teilweise umschließt und wobei der Halteabschnitt mindestens eine Lasche aufweist, die das Lager im Lenksäulenmantel in Richtung der Drehachse sichert. Erfindungsgemäß ist die Lasche mit dem Halteabschnitt des Lenksäulenmantels entlang einer Biegekante verbunden, wobei die Biegekante mit einer projizierten Drehachse einen Projektionswinkel von maximal 45° einschließt und wobei das freie Ende der Lasche in Richtung zu der Drehachse hin um die Biegekante gebogen ist wobei die die Lasche an ihrer dem Lager zugewendeten Seite eine Abschrägung aufweist, die gegenüber der Umfangsrichtung abgeschrägt ist.

Die Drehachse ist entlang einer Projektionsrichtung auf die Biegekante projiziert, wodurch die projizierte Drehachse gebildet wird und diese sich mit der Biegekante mindestens in einem Punkt trifft. Die Projektionsrichtung ist ausgehend von der Drehachse zu der Biegekante hin radial nach außen gerichtet, wobei die Projektion der Drehachse entlang dieser Projektionsrichtung soweit radial nach außen erfolgt, bis die projizierte Drehachse die Biegekante trifft.

Zur Verbesserung der Funktion ist allerdings ein Projektionswinkel von weniger als 30° zu bevorzugen. Besonders zu bevorzugen ist ein Projektionswinkel von weniger als 5°. Insbesondere zu bevorzugen ist eine Ausrichtung der Biegekante parallel zur Drehachse, was einem Projektionswinkel von 0° entspricht. In diesem Sinne ist eine "im Wesentlichen parallele" Ausrichtung der Biegekante zur Drehachse zu verstehen, nämlich eine Abweichung von weniger als 5° in Bezug zur exakten Parallelität.

Im Sinne von Polarkoordinaten kann als Umfangsrichtung die Richtung verstanden werden, die das Lager und die Rotationsachse umschließt. In diesem Sinne erstreckt sich die Lasche in Umfangsrichtung ins Innere hinein (=in Richtung der Drehachse). Zur einfacheren Darstellung wird daher im weiteren einfach nur von einem Verlauf in Umfangsrichtung gesprochen, der allerdings entsprechend meint, dass die Lasche, mit dem Halteabschnitt des Lenksäulenmantels entlang einer Biegekante verbunden ist, wobei das freie Ende der Lasche in Richtung der Drehachse hin um die Biegekante gebogen ist und die Biegekante im Wesentlichen parallel zur Drehachse ausgerichtet ist.

Dadurch, dass sich die Lasche mit ihrem freien Ende in Richtung der Drehachse der Lenksäule erstreckt, ist es möglich, eine Festlegung des Lagers in dem Lenksäulenmantel zu erreichen, bei welcher die Toleranzanforderungen an die einzelnen Bauteile verringert sind und welche dennoch einen spielfreien Sitz des Lagers ermöglicht und eine hohe axiale Steifigkeit bereitstellt.

Insbesondere ist durch die Ausprägung der Lasche in Umfangsrichtung des Lenksäulenmantels die Steifigkeit in axialer Richtung verglichen mit einer gleichdimensionierten Lasche, welche sich in Richtung der Drehachse erstreckt, höher. Dies ist der Fall, da bei der vorgeschlagenen Ausbildung die eingetragenen Axialkräfte in die Ebene der Lasche eingetragen werden und im Wesentlichen keine Kraftkomponenten vorliegen, die eine weitere Umformung der Lasche bewirken würden.

Unter der Eintragung der Axialkraft in die Ebene der Lasche ist zu verstehen, dass die Axialkraft über eine Stirnfläche der Lasche, die dem Lager zugewandt ist, der dem Lager zugewendeten Seite der Lasche, und mit diesem mittelbar oder unmittelbar in Kontakt steht, eingetragen wird. Bei einer Ausrichtung der Lasche in Richtung der Drehachse hingegen bewirken die eingetragenen Axialkräfte unmittelbar eine weitere Umformung der Lasche. Bei der erfindungsgemäßen Lasche hingegen wird trotz einer Umbiegung der Lasche in Umfangsrichtung zum Halten des Lagers beim Aufbringen einer Axialkraft in Richtung der Lagerrotationsrichtung die Kraft in die Ebene der Lasche eingetragen, und nicht senkrecht dazu. Entsprechend entstehen hier keine weiteren Biegemomente zum weiteren Biegen der ohnehin schon gebogenen Lasche.

Weil die Biegekante, um welche herum die Lasche zum Arretieren des Lagers im Lenksäulenmantel umgeformt wird, im Wesentlichen parallel zur Drehachse ausgerichtet ist wird eine Axialkraft in Richtung der Drehachse parallel zur Biegekante eingetragen, so dass zusätzliche Biegemomente um diese Biegekante herum nicht auftreten.

Entsprechend lässt sich auf diese Weise bei einer gleichen Dimensionierung der Lasche und entsprechend einer gleichen Schwächung des Lenksäulenmantels durch das Einbringen der Lasche eine höhere Axialsteifigkeit der Lagerung des Lagers erreichen.

Unter einer Lasche wird eine mit dem Lenksäulenmantel verbundene Struktur verstanden, welche mindestens zwei freigestellte Seiten aufweist und an einer dritten Seite mit dem Lenksäulenmantel verbunden ist. Damit kann die Lasche um die mit dem Lenksäulenmantel verbundene Seite herum, die auch die Biegekante ausbildet, so umgeformt werden, dass sich eine über das umgebende Material des Lenksäulenmantels erhebende Struktur ergibt, die als Halteanker oder als Haltenase zum Halten des Lagers im Lenksäulenmantel dient. Die Lasche kann aber auch eine beliebige andere polygonale Form, auch mit abgerundeten Ecken, aufweisen, solange sie um eine mit dem Lenksäulenmantel verbundene Seite herum zum Halten des Lagers umformbar ist.

Die Umfangsrichtung des Lenksäulenmantels kann durch einen Schnitt in einer senkrecht zur Erstreckungsachse des Lenksäulenmantels liegenden Ebene dargestellt werden, wobei sich die Umfangsrichtung dann entlang dieses Schnitts um den Lenksäulenmantel herum erstreckt. Die Erstreckungsachse des Lenksäulenmantels fällt üblicherweise mit der Drehachse und der Längsachse der Lenkspindel zusammen. Da der Lenksäulenmantel bevorzugt zumindest im Bereich der Aufnahme des Lagers einen runden Querschnitt aufweist, ist die Umfangsrichtung entsprechend die sich in Richtung des Umfangs des runden Querschnitts erstreckende Richtung, abgesehen von der Einformung des freien Endes der Lasche in Richtung der Drehachse.

Bevorzugt ist die Lasche über eine Biegekante einteilig mit dem Lenksäulenmantel verbunden und die Biegekante erstreckt sich im Wesentlichen parallel zur Drehachse. Entsprechend kann eine Umformung der Lasche um die Biegekante herum stattfinden, um das Lager zu halten. Da sich die Biegekante parallel zur Drehachse erstreckt, kann, wie bereits oben ausgeführt, eine erhöhte Steifigkeit der Lagerung des Lagers in Axialrichtung erreicht werden, da Axialkräfte parallel zu der Biegekante eingetragen werden und Kraftkomponenten senkrecht zu der Biegekante, welche zu einer weiteren Umformung der Lasche in der ursprünglichen Biegerichtungsform führen könnten, nicht oder nur sehr eingeschränkt auftreten.

Die Lasche weist an ihrer dem Lager zugewandten Seite eine Abschrägung auf. Die dem Lager zugewendete Seite ist daher nicht exakt in Umfangsrichtung des Lagers ausgebildet, sondern dazu abgeschrägt. Entsprechend kann das Lager bei einem Umformen der Lasche durch die mittels der Abschrägung aufgebrachten Keilwirkung festgelegt werden, ohne dass hierzu besonders hohe Anforderungen an die Maßhaltigkeit beziehungsweise an die Fertigungstoleranzen des Lagers gestellt werden müssten. Besonders bevorzugt ist die Abschrägung so ausgebildet, dass eine vorbestimmte Toleranz in der Breite des Lagers und/oder eine Toleranz bei der Ausbildung der Lasche ausgeglichen werden können.

Die Abschrägung ist besonders bevorzugt unter einem Neigungswinkel im Bereich von 45° bis 85° ausgerichtet. Zu bevorzugen sind Neigungswinkel im Bereich von 60° bis 75°. Der Neigungswinkel spannt sich zwischen der Projektion der Drehachse und der Projektion der Abschrägung der Lasche in die Projektionsebene auf. In Umfangsrichtung gesehen liegt der Winkel der Abschrägung entsprechen im Bereich von 5° bis 45°, wobei ein Winkelbereich von 15° bis 30° zu bevorzugen ist. So lässt sich erreichen, dass ein möglichst weiter Toleranzbereich abgedeckt werden kann und gleichzeitig ein Eintragen von Axialkräften im Wesentlichen parallel zur Biegekante und damit eine hohe axiale Steifigkeit erreicht werden kann.

In einer vorteilhaften Ausbildung ist die Lasche im Wesentlichen dreieckförmig ausgebildet, wobei die Basis des Dreiecks durch eine Biegekante, die mit dem Lenksäulenmantel einteilig verbunden ist, ausgebildet ist, und die dem Lager zugewendete Seite der Lasche abgeschrägt ist und sich eine freie Seite in Umfangsrichtung des Lenksäulenmantels erstreckt oder ebenfalls abgeschrägt ist, wobei die Lasche bevorzugt die Form eines ebenen Dreiecks ausbildet. Die Spitze des Dreiecks ist dabei bevorzugt abgerundet. Durch eine solche einfache Form der Lasche wird ein steifer Sitz des Lagers bei einer einfachen Herstellbarkeit und einem guten Toleranzausgleich erreicht.

Die Lasche ist bevorzugt kraftgesteuert um die Biegekante herum umgebogen, um das Lager mit einer vorgegebenen Vorspannkraft in dem Lenksäulenmantel zu halten.

Bevorzugt ist weiterhin eine Anlageschulter zum Anlegen des Lagers in dem Lenksäulenmantel ausgebildet und die Lasche ist so umgeformt, dass das Lager mit einer vorgegebenen Vorspannkraft gegen die Anlageschulter vorgespannt ist.

Um eine sichere Montage des Lagers zu erreichen und gleichzeitig eine vorgegebene Vorspannkraft auf das Lager aufbringen zu können, wird als Verfahren zum Montieren einer Lenksäule für ein Kraftfahrzeug gemäß einem der vorstehend beschriebenen Ausführungsformen vorgeschlagen, die Lasche kraftgesteuert so umzubiegen, dass das Lager mit einer vorgegebenen Vorspannkraft in dem Lenksäulenmantel gehalten wird.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Ansicht einer Lenksäule für ein Kraftfahrzeug in einer ersten Ausführungsform;
- Figur 2: eine schematische Seitenansicht der Lenksäule aus Figur 1;
- Figur 3: eine schematische Schnittdarstellung durch Bereiche der Lenksäule aus den Figuren 1 und 2;
- Figur 4: eine Detaildarstellung der Schnittansicht der Lenksäule aus Figur 3;
- Figur 5: eine schematische perspektivische Ansicht des Lenksäulenmantels der vorherigen Figuren mit einer Lasche in einer nicht umgeformten Vormontageposition;
- Figur 6: eine Detaildarstellung der Lasche im Lenksäulenmantel der Figur 5;
- Figur 7: der Lenksäulenmantel aus Figuren 5 und 6 mit umgeformter Lasche in einer montierten Position;
- Figur 8: eine Detaildarstellung der Lasche aus Figur 7;
- Figur 9: eine schematische Seitenansicht eines Lenksäulenmantels in einer weiteren Ausführungsform;
- Figur 10: eine schematische Seitenansicht eines Lenksäulenmantels in einer weiteren Ausführungsform;
- Figur 11: eine schematische Seitenansicht eines Lenksäulenmantels in einer weiteren Ausführungsform;
- Figur 12: eine schematische Seitenansicht eines Lenksäulenmantels in noch einer weiteren Ausführungsform;
- Figur 13: eine schematische Seitenansicht eines Lenksäulenmantels in einer weiteren Ausführungsform; und
- Figur 14: eine schematischer Teilquerschnitt des Lenksäulenmantels mit umgeformter Lasche, entsprechend Figur 1.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

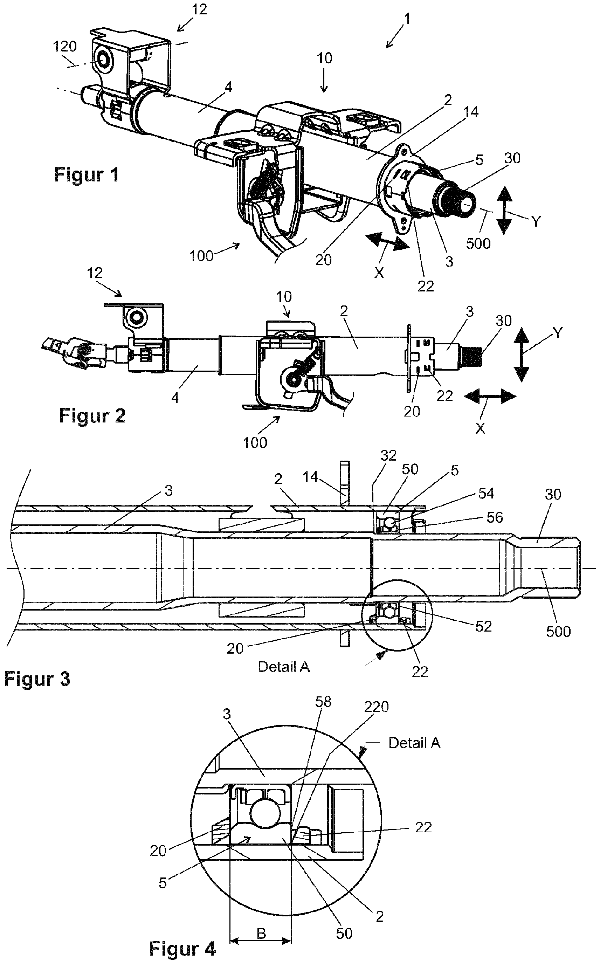

In den Figuren 1 bis 8 ist eine Lenksäule 1 in einem ersten Ausführungsbeispiel gezeigt. Die Lenksäule 1 weist einen Lenksäulenmantel 2 auf, welcher über eine Montageeinheit 10 und eine Trageinheit 12 am Chassis eines Kraftfahrzeugs festlegbar ist.

In dem Lenksäulenmantel 2 ist eine Lenkspindel 3, welche ein lenkradseitiges Ende 30 zur Anbindung an ein Lenkrad aufweist, in einem schematisch angedeuteten Lager 5 um die Drehachse 500 herum rotierbar gelagert. Die Lenkspindel 3 dient zur Übertragung eines Lenkmoments vom lenkradseitigen Ende 30 der Lenkspindel 3 auf stromabwärts gelegene Komponenten des Lenkstranges, um auf diese Weise schließlich den von einem Fahrer über ein Lenkrad eingebrachten Lenkbefehl auf die zu lenkenden Räder des Kraftfahrzeugs zu übertragen.

Das Lager 5 ist in dem gezeigten Ausführungsbeispiel als Wälzlager, nämlich als Kugellager, ausgeführt. Das Lager 5 weist entsprechend einen Lagerinnenring 52 und einen gegenüber diesem um eine Drehachse 500 herum rotierbaren Lageraußenring 50 auf. Zwischen dem Lageraußenring 50 und dem Lagerinnenring 52 sind Wälzkörper 54 in Form von Kugellagerkugeln vorgesehen, welche in einem Käfig 56 geführt sind und welche gemeinsam mit dem Lageraußenring 50 und dem Lagerinnenring 52 das Lager 5 als Kugellager ausbilden.

Der Lenksäulenmantel 2 kann in bekannter Weise um eine Schwenkachse 120 herum verschwenkt werden, um die Position des Lenksäulenmantels 2 in Höhenrichtung Y einzustellen. Um die Verschwenkung bewirken zu können, muss eine prinzipiell aus dem Stand der Technik bekannte Verriegelungseinheit 100 in ihre Öffnungsposition bewegt werden. Durch die Verschwenkung des Lenksäulenmantels kann eine Positionierung der Lenkspindel 3 und insbesondere des lenkradseitigen Endes 30 der Lenkspindel 3 erreicht werden, um das am lenkradseitigen Ende 30 der Lenkspindel 3 gehaltene Lenkrad in eine für den Fahrer des jeweiligen Kraftfahrzeuges optimale Position zu bewegen. Weiterhin kann nach Lösen der Verriegelung der Verriegelungseinheit 100 der Lenksäulenmantel 2 auch in Längsrichtung X verstellt werden, um ebenfalls das lenkradseitige Ende 30 der Lenkspindel 3 an die jeweiligen ergonomischen Bedürfnisse eines Fahrers anzupassen. Mechanismen zur Höhenverstellung beziehungsweise Längsverstellung sowie zum Öffnen und Verriegeln einer Verriegelungseinheit 100 einer verstellbaren Lenksäule 1 sind aus dem Stand der Technik wohlbekannt.

Der Lenksäulenmantel 2 sowie die Lenkspindel 3 sind zur Längsverstellung der Lenksäule 1 bezüglich eines hinteren Lenksäulenmantels 4 sowie bezüglich eines hier nicht gezeigten hinteren Teils der Lenkspindel teleskopierbar. Neben der Eignung zur Längsverstellung dient die Teleskopierbarkeit im Crashfall auch dazu, ein Zurückweichen des Lenkrades beim Auftreffen des Fahrers auf diesem zu ermöglichen. Die Teleskopierbarkeit von Lenksäulen ist prinzipiell aus dem Stand der Technik bekannt.

Am Lenksäulenmantel 2 ist ein Flansch 14 zum Halten von Funktionseinheiten des Lenkrades, beispielsweise zum Halten einer Grundeinheit von Lenkstockschaltern oder Lenkstockbedienelementen, wie beispielsweise Blinkern, Fernlichtschaltern oder Scheibenwischerschaltern vorgesehen.

Der Lenksäulenmantel 2 ist in dem gezeigten Ausführungsbeispiel rohrförmig ausgebildet und weist entsprechend einen runden Querschnitt in einer Ebene senkrecht zur Rohrachse auf.

Wie aus der Schnittdarstellung der Figur 3 besonders gut zu erkennen ist, ist das Lager 5 zwischen dem Lenksäulenmantel 2 und der Lenkspindel 3 angeordnet. Dabei steht der Lageraußenring 50 in direktem Kontakt mit der inneren Oberfläche des Lenksäulenmantels 2. Der Lagerinnenring 52 steht in direktem Kontakt mit der Außenseite der Lenkspindel 3, wobei der Lagerinnenring 52 auch an einer Schulter 32 der Lenkspindel anliegt.

Das Lager 5 liegt in axialer Richtung an seinem Lageraußenring 5 im Lenksäulenmantel 2 an einer Anlageschulter 20 an. Die Anlageschulter 20 ist in dem gezeigten Ausführungsbeispiel durch eine Ausstanzung und Umformung des freigestanzten Materials des Lenksäulenmantels 2 ausgebildet, wobei das Material des Lenksäulenmantels 2 nach innen in den Lenksäulenmantel hinein umgeformt wurde. Eine Anlageschulter 20 zur Anlage des Lageraußenrings 5 in axialer Richtung kann aber auch auf eine andere Weise bereitgestellt werden, beispielsweise durch Ausbildung eines Durchmessersprungs des Lenksäulenmantels 2, ein Anschweißteil oder auf andere bekannte Weise.

An der Stirnseite 58 des Lageraußenrings 50, welche dem lenkradseitigen Ende 30 der Lenkspindel 3 zugewendet ist, wird das Lager im Lenksäulenmantel 2 durch eine Lasche 22 gehalten. Die Lasche 22 ist aus dem Material des Lenksäulenmantels 2 herausgestanzt und das auf diese Weise freigestanzte Material ist zur Sicherung und Halterung des Lagers 5 an dessen Lageraußenring 50 nach innen in den Lenksäulenmantel 2 herein umgeformt. Die Lasche 22 besteht entsprechend aus dem Material des Lenksäulenmantels 2 und ist auch noch einstückig mit dem Lenksäulenmantel 2 verbunden. Mit anderen Worten wird die Lasche 22 durch das Ausstanzen nicht vollständig von dem Lenksäulenmantel 2 getrennt, sondern bleibt mit diesem verbunden.

Die Lasche 22 erstreckt sich zunächst im Wesentlichen in Umfangsrichtung des rohrförmig ausgebildeten Lenksäulenmantels 2 und damit auch in Umfangsrichtung des Lagers 5 und ist aus dieser Position nach innen in den Lenksäulenmantel 2 hinein umgeformt, um das Lager 5 in seiner Position angepresst an die Anlageschulter 20 zu halten.

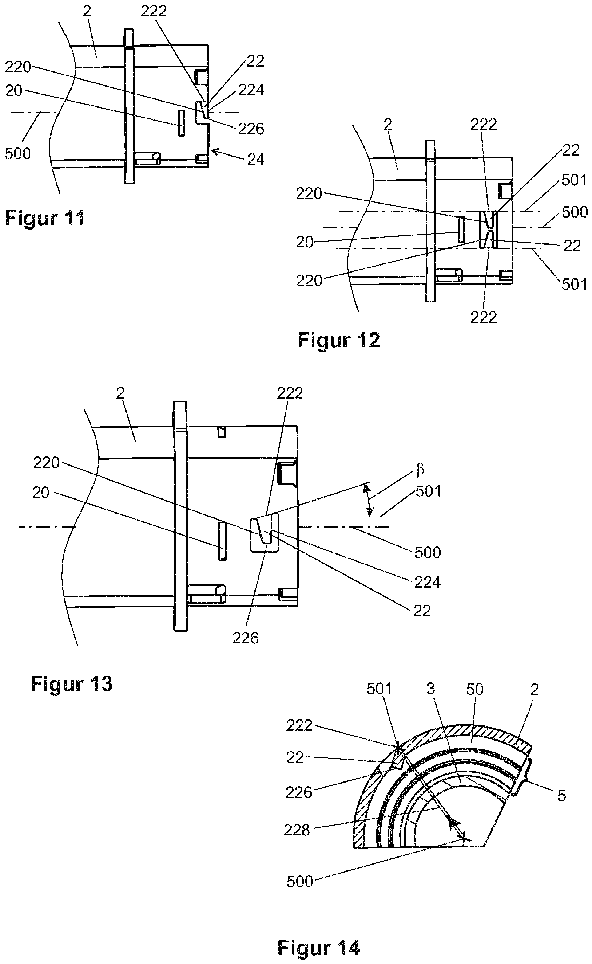

In der Figur 14 ist ein schematischer Teilquerschnitt des Lenksäulenmantels 2 im Bereich des Halteabschnittes gezeigt. In dem Lenksäulenmantel 2 ist die Lenkspindel 3 in dem Lager 5 um die Drehachse 500 herum rotierbar gelagert. Das Lager 5 umfasst den Lageraußenring 50 der im Lenksäulenmantel 2 aufgenommen ist. Der Lenksäulenmantel 2 weist die Lasche 22 auf, wobei diese Lasche 22 mit dem Halteabschnitt des Lenksäulenmantels 2 entlang der Biegekante 222 verbunden ist und das freies Ende 226 aufweist. Dieses freie Ende 226 der Lasche 22 ist in Richtung zu der Drehachse 500 hin um die Biegekante 222 gebogen und sichert den Lageraußenring 50 und damit das Lager 5 gegen eine mögliche Verschiebung in eine Richtung der Drehachse 500.

Die Drehachse 500 ist entlang der Projektionsrichtung 228 auf die Biegekante 222 projiziert, wodurch die projizierte Drehachse 501 gebildet wird und diese sich mit der Biegekante 222 trifft. Die Projektionsrichtung 228 ist ausgehend von der Drehachse 500 zu der Biegekante 222 radial nach außen gerichtet, wobei die Projektion der Drehachse 500 entlang dieser Projektionsrichtung 228 soweit radial nach außen erfolgt, bis die projizierte Drehachse 501 die Biegekante 222 zumindest in einem Punkt trifft.

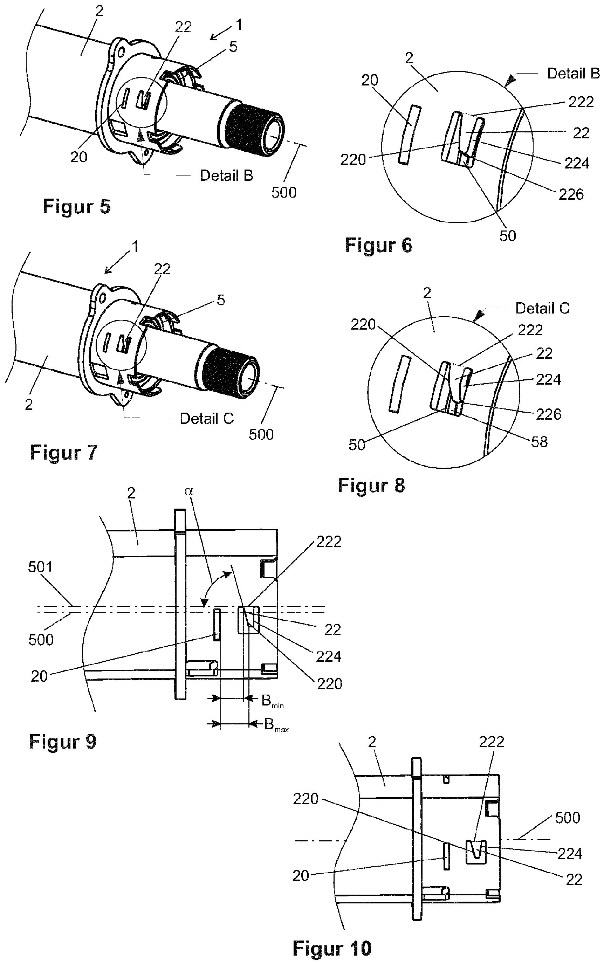

In den Figuren 9 und 14 ist die projizierte Drehachse 501 gezeigt, die auf die Biegekante 222 ausgehend von der Drehachse 500 entlang der Projektionsrichtung 228 projiziert ist. Dabei fällt die projizierte Drehachse 501 mit der Biegekante 222 direkt aufeinander, so dass sich die Biegekante 222 und die projizierte Drehachse 501 in unendlich vielen Punkten treffen und somit parallel sind, wobei der Projektionswinkel β auf Grund der Parallelität einen Wert von 0° aufweist.

In den Figuren 5 bis 8 sind schematisch zwei unterschiedliche Zustände des Lenksäulenmantels 2 gezeigt, nämlich in den Figuren 5 und 6 ein Vormontagezustand, in welchem die Lasche 22 noch nicht zur Halterung des Lagers 5 umgebogen ist, und in den Figuren 7 und 8 ein Zustand des Lenksäulenmantels 2, in welchem die Lasche 22 bereits vollständig umgebogen ist, um das Lager 5 mit einer definierten Vorspannung an die Anlageschulter 20 anzupressen und damit fest im Lenksäulenmantel 2 zu halten.

In den Figuren 5 und 6 ist die Lasche 22 im Detail in einem nicht umgeformten Vormontagezustand zu erkennen. Da die Lasche 22 aus dem Material des Lenksäulenmantels 2 herausgearbeitet ist, ist sie als Teil des Lenksäulenmantels 2 ausgebildet und ist entlang einer Biegekante 222 mit dem übrigen Lenksäulenmantel 2 verbunden. Die Biegekante 222 erstreckt sich im Wesentlichen parallel zur Drehachse 500. Die Lasche 22 hingegen erstreckt sich im Wesentlichen in Umfangsrichtung des rohrförmigen Lenksäulenmantels 2 und damit auch in Umfangsichtung des Lageraußenrings 50 des im Lenksäulenmantel 2 aufgenommenen Lagers 5.

Wie sich auch aus den Figuren ergibt, weist die Lasche 22 auf ihrer dem Lager 5 zugewendeten Seite 220 eine Abschrägung auf, um beim Umformen der Lasche 22 durch das Aufbringen einer durch die Abschrägung bewirkten Keilwirkung eine definierte Anpresskraft auf den Außenring 50 des Lagers 5 aufzubringen. Dadurch, dass die Abschrägung auf der dem Lager 5 zugewendeten Seite 220 der Lasche 22 vorgesehen ist, können auch in der Breite B des Außenringes 50 des Lagers 5 auftretende Toleranzen aufgefangen werden, so dass keine hohen Anforderungen an die Toleranzhaltigkeit der Breite B des Lagers 5 gestellt werden müssen. Entsprechend kann das Lager 5 kostengünstig ausgewählt werden.

Weiterhin können so auch die Anforderungen an die Positioniergenauigkeit der Ausstanzungen zur Ausbildung der Anlageschulter 20 und der Lasche 22 reduziert werden, da auch hier mögliche Toleranzen durch die Abschrägung der dem Lager 5 zugewendeten Seite 220 der Lasche 22 ausgeglichen werden können. Insgesamt lässt sich die Fertigung und Montage der Lenksäule 1 auf diese Weise vereinfachen.

Wie auch aus Figur 9 schematisch zu erkennen, ist die dem Lager 5 zugewendete Seite 220 der Lasche 22 im nicht umgeformten Zustand unter einem Neigungswinkel α bezüglich der projizierten Drehachse 501, wobei diese projizierte Drehachse 501 ausgehend von der Drehachse 500 radial nach außen auf die Biegekante 222 projiziert ist, ausgebildet. Der Neigungswinkel α ist typischerweise im Bereich von 45° bis 85° und bevorzugt im Bereich von 60° bis 75°. Durch die angegebenen Winkelbereiche kann eine Keilwirkung zum Ausgleich der Toleranzen aufgebracht werden, wobei gleichzeitig entlang der Drehachse 500 auf das Lager 5 aufgebrachte Kräfte im Wesentlichen in einer Richtung in die Lasche 22 eingeleitet werden, welche im Wesentlichen parallel zu der nach der Biegung ausgebildeten Biegekante 222 ist. Damit bewirken auf das Lager 5 aufgebrachte Axialkräfte keine zusätzliche Umformung der Lasche 22 um die Biegekante 222 herum, so dass eine hohe axiale Steifigkeit erreicht werden kann.

In dem gezeigten Ausführungsbeispiel ist weiterhin eine freie Seite 224 zur Definition der ausgestanzten Lasche 22 vorgesehen. Die abgeschrägte, dem Lager 5 zugewendete Seite 220 und die freie Seite 224 treffen sich so, dass die Lasche 22 schematisch eine Dreiecksform ausbildet. Die Lasche 22 kann jedoch beliebige andere Formen aufweisen und beispielsweise auch eine rechteckige oder quadratische Grundform zwischen der Biegekante 222 und den restlichen Seiten der Lasche 22 auszubilden. Die dem Lager 5 zugewendete Seite 220 ist wie oben beschrieben jedoch abgeschrägt, um den oben beschriebenen Toleranzausgleich bereitzustellen. Die Grundform der Lasche 22 ist daher bevorzugt dreieckförmig oder polygonal mit mindestens einer abgeschrägten, dem Lager 5 zugewendeten Seite 220.

In Figur 7 und 8 ist die Lenksäule 1 in einem Zustand gezeigt, in welchem die Lasche 22 so umgeformt ist, dass sie um ihre Biegekante 222 herum nach innen in den Lenksäulenmantel 2 hineingebogen ist. Die generelle Ausrichtung der Lasche 22 verbleibt dabei in Umfangsrichtung des Lenksäulenmantels 2 beziehungsweise des Lagers 5. Die Biegekante 222, um welche herum die Lasche 22 umgeformt wurde, erstreckt sich im Wesentlichen parallel zur Drehachse 500.

Eine vorgegebene Anpresskraft beziehungsweise Vorspannung des Lagers 5 an die Anlageschulter 20 beim Umformen der Lasche 22 kann aufgrund der abgeschrägten, dem Lager 5 zugewendeten Seite 220 der Lasche 22 durch ein kraftgesteuertes Umformen der Lasche 22 erreicht werden. Durch das Aufbringen einer entsprechend gesteuerten Kraft zum Umformen der Lasche 22 kann eine vorgegebene Anpresskraft beziehungsweise Vorspannung unabhängig von den jeweils vorliegenden Toleranzen erreicht werden.

Es ist besonders in Figur 8 zu erkennen, dass die dem Lager 5 zugewendete Seite 220 der Lasche 22 an dem Lageraußenring 50 und insbesondere an der Stirnseite 58 des Lageraußenrings 50 anliegt. Da die dem Lager zugewendete Seite 220 der Lasche 22 abgeschrägt ist, kommt die Lasche 22 innerhalb eines vorbestimmten Toleranzbereichs stets in Anlage mit der Stirnseite 58 des Lageraußenrings 50 des Lagers 5 und übt bei einem kraftgesteuerten Umformen der Lasche 22 eine Vorspannkraft in Axialrichtung, also in Richtung der Drehachse 500, auf das Lager 5 aus.

In einer nicht gezeigten Variante kann die Lasche 22 auch in eine Umfangsnut des Lagers 5 eingreifen.

Weiterhin kann in einer nicht gezeigten weiteren Variante die Anlageschulter 20, die das Lager in axialer Richtung abstützt, ebenfalls durch eine erfindungsgemäße Lasche realisiert werden.

Aus Figur 9 lässt sich die Funktion des möglichen Toleranzausgleichs mittels der abgeschrägten Lasche 22 besonders gut erkennen. Es sind hier eine maximale Breite Bₘₐₓ und eine minimale Breite Bₘᵢₙ für die Breite des Lageraußenrings 50 angegeben - jeweils ausgehend von der Anlageschulter 20. Durch die abgeschrägte, dem Lager 5 zugewendete Seite 220 lässt sich entsprechend der zwischen Bₘₐₓ und Bₘᵢₙ ausgebildete Toleranzbereich des Lagers 5 ausgleichen.

Dadurch, dass sich die Lasche 22 in Umfangsrichtung des Lenksäulenmantels 2 erstreckt und sich die Biegekante 222 der Lasche 22 im Wesentlichen parallel zu der Drehachse 500 erstreckt, werden Kräfte in Richtung der Drehachse 500 im Wesentlichen in die Ebene der Lasche 22 eingetragen. Die Axialkräfte wirken entsprechend auf die Lasche 22 im Wesentlichen parallel zur Biegekante 222, so dass keine zusätzlichen Biegemomente zur weiteren Umformung der Lasche 22 eingetragen werden. Vielmehr werden die Axialkräfte in der Ebene der Lasche abgetragen, so dass keine zusätzliche Umformung der Lasche 22 auftritt und entsprechend eine erhöhte Steifigkeit der Anbindung des Lagers 5 an den Lenksäulenmantel 2 erreicht wird.

Zum Vergleich und zur Veranschaulichung würden bei einer Lasche, deren Biegekante sich im Wesentlichen senkrecht zur Drehachse erstreckt, jegliche Axialkräfte zusätzliche Biegemomente in die Lasche eintragen, welche entsprechend zu einer weiteren Umformung der Lasche und damit zu einer Verringerung der jeweiligen Haltekräfte führen können.

Entsprechend kann durch die oben beschriebene Lasche 22 eine Anbindung des Lagers 5 an den Lenksäulenmantel 2 erreicht werden, welche ein hohe axiale Steifigkeit aufweist und gleichzeitig einen spielfreien Sitz des Lagers 5 bei reduzierten Toleranzanforderungen an das Lager 5 sowie an die Positionierung der Anlageschulter 20 und der Lasche 22 im Lenksäulenmantel 2 ermöglicht. Weiterhin werden zusätzliche Teile zur Anbindung des Lagers 5 an den Lenksäulenmantel 2 durch die Ausbildung der Lasche 22 aus dem Material des Lenksäulenmantels 2 vermieden.

In Figur 10 ist eine weitere schematische Darstellung eines Teils einer Lenksäule in einer Seitenansicht auf den Lenksäulenmantel 2 gezeigt. Die Lasche 22 weist wiederum eine dem Lager 5 zugewandte Seite 220 auf, welche abgeschrägt ist. Die freie Seite 224 ist in dem gezeigten Ausführungsbeispiel ebenfalls gegenüber der Umfangsrichtung abgeschrägt, so dass die Lasche 22 im Wesentlichen ein gleichwinkliges Dreieck mit der Basis bei der Biegekante 222 ausbildet. Auch andere Dreiecksformen der Lasche 22 sind denkbar, solange die generelle Ausrichtung der nicht umgeformten Lasche 22 in Umfangsrichtung des Lenksäulenmantels 2 beziehungsweise in Umfangsrichtung des Lagers 5 liegt und eine Biegekante 222 im Wesentlichen parallel zur Drehachse 500 ausgebildet ist.

In Figur 11 ist eine weitere Möglichkeit der Ausbildung der Lasche 22 gezeigt, wobei die Lasche 22 hier wiederum eine sich parallel zur Drehachse 500 erstreckende Biegekante 222 aufweist, und die dem Lager zugewendete Seite 220 abgeschrägt ist. Die freie Seite 224 fällt hier mit der Stirnseite 24 des Lenksäulenmantels 2 zusammen.

In Figur 12 ist eine weitere Ausprägung der Lasche 22 gezeigt, wobei hier zwei gegenüberliegende Laschen 22 vorgesehen sind, welche sich beide im Wesentlichen in Umfangsrichtung des Lenksäulenmantels 2 erstrecken, und welche in einer gemeinsamen Stanzausnehmung vorliegen.

Die zwei projizierten Drehachsen 501 sind ausgehend von der Drehachse 500 radial nach außen auf die jeweilige Biegekante 222 der entsprechenden Lasche 22 projiziert. Dabei trifft sich die jeweilige Drehachse 501 mit ihr durch die Projektion zugeordneten Biegekante 222. Die jeweilige Biegekante 222 und der ihr zugeordneten projizierte Drehachse 501 treffen sich in der hier dargestellten Ausführungsvariante in unendlich vielen Punkten und sind somit parallel, wobei der Projektionswinkel β auf Grund der Parallelität einen Wert von 0° aufweist.

Die beiden Laschen 22 können so umgebogen werden, dass ihre jeweiligen, dem Lager 5 zugewendeten Seiten 220, die wiederum abgeschrägt sind, sowohl einen Toleranzausgleich bereitstellen, als auch eine definierte Vorspannkraft bereitstellen, wenn sie kraftgesteuert umgebogen werden.

In der Figur 13 ist eine schematische Darstellung eines Teils einer Lenksäule in einer Seitenansicht auf den Lenksäulenmantel 2 gezeigt. Der Lenksäulenmantel 2 weist die Lasche 22 auf, wobei diese Lasche 22 mit dem Halteabschnitt des Lenksäulenmantels 2 entlang der Biegekante 222 verbunden ist und das freies Ende 226 aufweist. Weiterhin umfasst die Lasche 22 eine dem Lager 5 zugewendete Seite 220 und die freie Seite 224. Die projizierte Drehachse 501 ist ausgehend von der Drehachse 500 radial nach außen auf die Biegekante 222 projiziert. Dabei trifft sich die Drehachse 501 mit der Biegekante 222 genau in einem Punkt, da die Biegelinie 222 in einem Projektionswinkel β mit einem Wert größer als 0° zur projizierten Drehachse 501 angeordnet ist., Im Beispiel beträgt der Projektionswinkel β zwischen der Biegekante 222 und der projizierten Drehachse 501 15°.

### Bezuqszeichenliste

- 1: Lenksäule
- 10: Montageeinheit
- 12: Trageinheit
- 14: Flansch
- 100: Verriegelungseinheit
- 120: Schwenkachse
- 2: Lenksäulenmantel
- 20: Anlageschulter
- 22: Lasche
- 24: Stirnseite
- 220: dem Lager zugewendete Seite
- 222: Biegekante
- 224: freie Seite
- 226: freies Ende
- 228: Projektionsrichtung
- 3: Lenkspindel
- 30: lenkradseitiges Ende
- 32: Schulter
- 4: hinterer Lenksäulenmantel
- 5: Lager
- 50: Lageraußenring
- 52: Lagerinnenring
- 54: Wälzkörper
- 56: Käfig
- 58: Stirnseite des Lageraußenrings
- 500: Drehachse
- 501: Projizierte Drehachse

- X: Längsrichtung
- Y: Höhenrichtung
- B: Breite des Lagers
- Bₘᵢₙ: minimale Breite des Lagers
- Bₘₐₓ: maximale Breite des Lagers
- α: Neigungswinkel der Abschrägung
- β: Projektionswinkel

## Patentansprüche

1. Lenksäule (1) für ein Kraftfahrzeug, umfassend einen Lenksäulenmantel (2), wobei der Lenksäulenmantel (2) eine Mantelfläche mit einem Halteabschnitt umfasst, wobei der Halteabschnitt ein Lager (5) zur drehbaren Lagerung einer Lenkspindel (3) um eine Drehachse (500) zumindest teilweise umschließt und wobei der Halteabschnitt mindestens eine Lasche (22) aufweist, die das Lager (5) im Lenksäulenmantel (2) in Richtung der Drehachse (500) sichert,
wobei die Lasche (22) mit dem Halteabschnitt des Lenksäulenmantels (2) entlang einer Biegekante (222) verbunden ist, wobei die Biegekante (222) mit einer projizierten Drehachse (501) einen Projektionswinkel (β) von maximal 45° einschließt und wobei das freie Ende (226) der Lasche (22) in Richtung zu der Drehachse (500) hin um die Biegekante (222) gebogen ist,
**dadurch gekennzeichnet,**
**dass** die Lasche (22) an ihrer dem Lager zugewendeten Seite (220) eine Abschrägung aufweist, die gegenüber der Umfangsrichtung abgeschrägt ist.

2. Lenksäule (1) gemäß Anspruch 1, **dadurch gekennzeichnet, dass** die Lasche (22) und der Halteabschnitt aus einem Blechumformteil bestehen.

3. Lenksäule (1) gemäß Anspruch 2, **dadurch gekennzeichnet, dass** die Abschrägung so ausgebildet ist, dass eine vorbestimmte Toleranz in der Breite (B) des Lagers (5) und/oder eine Toleranz bei der Ausbildung der Lasche (22) ausgeglichen werden kann.

4. Lenksäule (1) gemäß Anspruch 2 oder 3, **dadurch gekennzeichnet, dass** die dem Lager (5) zugewandte Seite (220) mit der Projektion der Drehachse (500) einen Neigungswinkel (α) im Bereich von 45° bis 85° einschließt.

5. Lenksäule (1) gemäß einem der vorstehenden Ansprüche, **dadurch gekennzeichnet, dass** die Lasche (22) im Wesentlichen dreieckförmig ausgebildet ist, wobei die Basis des Dreiecks durch eine Biegekante (222), ausgebildet ist, das freie Ende (226) der Lasche (22) in Richtung der Drehachse (500) um die Biegekante (222) gebogen ist, und die dem Lager zugewendete Seite (220) der Lasche (22) abgeschrägt ist und sich eine freie Seite (224) in Umfangsrichtung des Lenksäulenmantels (2) erstreckt oder ebenfalls abgeschrägt ist, wobei die Lasche (22) bevorzugt die Form eines ebenen Dreiecks ausbildet.

6. Lenksäule (1) gemäß einem der vorstehenden Ansprüche, **dadurch gekennzeichnet, dass** die Lasche (22) kraftgesteuert um die Biegekante (222) herum umgebogen ist, um das Lager (5) mit einer vorgegebenen Vorspannkraft in dem Lenksäulenmantel (2) zu halten.

7. Lenksäule (1) gemäß einem der vorstehenden Ansprüche, **dadurch gekennzeichnet, dass** eine Anlageschulter (20) zum Anlegen des Lagers (5) in dem Lenksäulenmantel (2) ausgebildet ist und die Lasche (22) so umgeformt ist, dass das Lager (5) mit einer vorgegebenen Vorspannkraft gegen die Anlageschulter (20) vorgespannt ist.

8. Verfahren zum Montieren einer Lenksäule für ein Kraftfahrzeug gemäß einem der vorstehenden Ansprüche, **dadurch gekennzeichnet, dass** die Lasche (22) kraftgesteuert so umgebogen wird, dass das Lager (5) mit einer vorgegebenen Vorspannkraft in dem Lenksäulenmantel (2) gehalten wird.

## Claims

1. Steering column (1) for a motor vehicle, comprising a steering column jacket (2), wherein the steering column jacket (2) comprises a jacket surface having a retaining segment, wherein the retaining segment at least partially surrounds a bearing (5) for the rotatable mounting of a steering spindle (3) about an axis of rotation (500), and wherein the retaining segment has at least one tab (22) which secures the bearing (5) in the steering column jacket (2) in the direction of the axis of rotation (500),
wherein the tab (22) is connected to the retaining segment of the steering column jacket (2) along a bending edge (222), wherein the bending edge (222) encloses a projection angle (β) of at maximum 45° with a projected axis of rotation (501), and wherein the free end (226) of the tab (22) is bent around the bending edge (222) in the direction toward the axis of rotation (500),
**characterized in that**
the tab (22) has a bevel on its side (220) facing the bearing, which bevel is beveled in relation to the circumferential direction.

2. Steering column (1) according to Claim 1, **characterized in that** the tab (22) and the retaining segment are composed of a formed sheet-metal part.

3. Steering column (1) according to Claim 2, **characterized in that** the bevel is designed in such a manner that a predetermined tolerance in the width (B) of the bearing (5) and/or a tolerance in the design of the tab (22) can be compensated for.

4. Steering column (1) according to Claim 2 or 3, **characterized in that** the side (220) facing the bearing (5) encloses an angle of inclination (α) within the range of 45° to 85° with the projection of the axis of rotation (500).

5. Steering column (1) according to one of the preceding claims, **characterized in that** the tab (22) is of substantially triangular design, wherein the base of the triangle is formed by a bending edge (222), the free end (226) of the tab (22) is bent around the bending edge (222) in the direction of the axis of rotation (500), and that side (220) of the tab (22) which faces the bearing is beveled, and a free side (224) extends in the circumferential direction of the steering column jacket (2) or is likewise beveled, wherein the tab (22) preferably forms the shape of a flat triangle.

6. Steering column (1) according to one of the preceding claims, **characterized in that** the tab (22) is bent under force control around the bending edge (222) in order to retain the bearing (5) in the steering column jacket (2) with a predetermined pretensioning force.

7. Steering column (1) according to one of the preceding claims, **characterized in that** a bearing shoulder (20) is formed for placing the bearing (5) in the steering column jacket (2), and the tab (22) is deformed in such a manner that the bearing (5) is pretensioned against the bearing shoulder (20) with a predetermined pretensioning force.

8. Method for mounting a steering column for a motor vehicle according to one of the preceding claims, **characterized in that** the tab (22) is bent over under force control in such a manner that the bearing (5) is retained in the steering column jacket (2) with a predetermined pretensioning force.

## Revendications

1. Colonne de direction (1) pour un véhicule automobile, comportant une gaine de colonne de direction (2), dans laquelle la gaine de colonne de direction (2) comporte une surface de gaine dotée d'une partie de retenue, dans laquelle la partie de retenue entoure au moins partiellement un palier (5) servant au montage rotatif d'un arbre de direction (3) autour d'un axe de rotation (500), et dans laquelle la partie de retenue comprend au moins une languette (22) qui fixe le palier (5) dans la gaine de colonne de direction (2) dans la direction de l'axe de rotation (500),
dans laquelle la languette (22) est reliée à la partie de retenue de la gaine de colonne de direction (2) le long d'une arête de pliage (222), dans laquelle l'arête de pliage (222) forme avec un axe de rotation (501) projeté un angle de projection (β) d'au maximum 45°, et dans laquelle l'extrémité libre (226) de la languette (22) est pliée autour de l'arête de pliage (222) en direction de l'axe de rotation (500),
**caractérisée en ce que**
la languette (22) comprend un biseau sur son côté (220) tourné vers le palier, lequel biseau est en biais par rapport à la direction périphérique.

2. Colonne de direction (1) selon la revendication 1, **caractérisée en ce que** la languette (22) et la partie de retenue sont constituées d'une pièce façonnée en tôle.

3. Colonne de direction (1) selon la revendication 2, **caractérisée en ce que** le biseau est formé de telle sorte qu'une tolérance prédéfinie dans la largeur (B) du palier (5) et/ou qu'une tolérance lors de la formation de la languette (22) puissent être compensées.

4. Colonne de direction (1) selon la revendication 2 ou 3, **caractérisée en ce que** le côté (220) tourné vers le palier (5) forme avec la projection de l'axe de rotation (500) un angle d'inclinaison (α) dans la plage de 45° à 85°.

5. Colonne de direction (1) selon l'une des revendications précédentes, **caractérisée en ce que** la languette (22) se présente sensiblement sous forme triangulaire, la base du triangle étant formée par une arête de pliage (222), l'extrémité libre (226) de la languette (22) étant pliée autour de l'arête de pliage (222) en direction de l'axe de rotation (500), et le côté (220) de la languette (22) tourné vers le palier étant en biais, et un côté libre (224) s'étendant dans la direction périphérique de la gaine de colonne de direction (2) ou étant également en biais, la languette (22) se présentant de préférence sous la forme d'un triangle plan.

6. Colonne de direction (1) selon l'une des revendications précédentes, **caractérisée en ce que** la languette (22) est pliée autour de l'arête de pliage (222) de manière commandée par force, afin de retenir le palier (5) dans la gaine de colonne de direction (2) à l'aide d'une force de précontrainte prédéfinie.

7. Colonne de direction (1) selon l'une des revendications précédentes, **caractérisée en ce qu'**un épaulement d'appui (20) pour l'appui du palier (5) dans la gaine de colonne de direction (2) est formé et la languette (22) est façonnée de telle sorte que le palier (5) soit précontraint contre l'épaulement d'appui (20) à l'aide d'une force de précontrainte prédéfinie.

8. Procédé de montage d'une colonne de direction pour un véhicule automobile selon l'une des revendications précédentes, **caractérisé en ce que** la languette (22) est pliée de manière commandée par force de telle sorte que le palier (5) soit retenu dans la gaine de colonne de direction (2) à l'aide d'une force de précontrainte prédéfinie.
